# EUROPEAN PATENT APPLICATION

(11) **EP 3 950 162 A1**
(43) Date of publication of application: **09.02.2022**
(21) Application number: 20776398.8
(22) Date of filing: 31.01.2020
(51) Int. Cl.: B21D 28/02, B21D 28/14, H02K 15/02

(54) **METHOD FOR PRODUCING STATOR CORE PLATE, STATOR CORE PLATE, STATOR CORE, AND DIE**

(30) Priority: 28.03.2019 JP 2019063586
(71) Applicant: Nidec Corporation, Minami-ku, Kyoto-shi, Kyoto 601-8205 (JP)
(72) Inventor: HONDA, Takeshi, Kyoto-shi, Kyoto 601-8205 (JP)
(74) Representative: Zimmermann, Tankred Klaus
(86) International application number: PCT/JP2020/003708
(87) International publication number: WO 2020/195157

(57) **Abstract**

A method of manufacturing a stator core plate, the plate having a protrusion extending radially outward from a disk-shaped main body, includes a protrusion forming step of punching a part of a steel sheet in a shape including at least a part of an outer shape X of the protrusion to form at least the part of the outer shape of the protrusion, and a main body forming step of punching the steel sheet in a shape continuous with the outer shape of the protrusion formed in the steel sheet to form the main body.

## Description

### Technical Field

The present invention relates to a stator core plate manufacturing method, a stator core plate, a stator core, and a mold.

### Background Art

As a method of manufacturing a stator core of a motor, a method of laminating a plurality of stator core plates, obtained by punching a steel sheet into the shape of a stator core by a pressing device or the like, in the thickness direction is known. In the stator core manufactured by such a method, there is a case where a protrusion for providing an attachment hole or the like is formed on the outer periphery. In this case, the stator core plate is manufactured by punching a steel sheet in the shape of the stator core having the protrusion.

In a sheet metal member having a protrusion near an outer edge like the stator core plate having the protrusion described above, the protrusion may be plastically deformed when a steel sheet is punched with a mold. Examples of the factor of deformation of the protrusion include a variation in distribution of a punching stress caused by contact of the protrusion with the mold when the steel sheet is punched with the mold, and a variation in strength distribution in the protrusion.

As a manufacturing method for preventing such deformation of the protrusion, for example, as disclosed in Patent Literature 1, a method of manufacturing a sheet metal member in which a portion having a lower strength than the protrusion is formed around the protrusion is known. In this manufacturing method, after a window portion is punched on a main body side of the protrusion, an entire outer shape including the protrusion and a main body is formed. That is, the entire outer shape is formed after the portion having a lower strength than the protrusion is formed in the main body. As a result, when the entire outer shape is formed, even if the protrusion comes into contact with the mold, the portion having a lower strength than the protrusion elastically deforms first, so that plastic deformation of the protrusion can be prevented.

### Citation List

### Patent Literature

Patent Literature 1: JP 2017-087279 A

### Summary of Invention

### Technical Problem

In the case of manufacturing the portion having a lower strength than the protrusion as in the configuration disclosed in Patent Literature 1 described above, it is necessary to form a punched hole or the like on the main body side. However, in a stator core manufactured by such a manufacturing method, a space that prevents passage of a magnetic flux is generated in the main body of the stator core, and thus, there is a possibility that magnetic flux density generated in the stator core is reduced.

An object of the present invention is to provide a method of manufacturing a stator core plate capable of preventing plastic deformation of a protrusion without forming a space that causes magnetic flux density to be reduced in a main body.

### Solution to Problem

A method of manufacturing a stator core plate according to an embodiment of the present invention is a method of manufacturing a stator core plate having a protrusion extending radially outward from a disk-shaped main body. This method of manufacturing a stator core plate includes a protrusion forming step of forming at least a part of an outer shape of the protrusion by punching a part of a steel sheet in a shape including at least the part of the outer shape of the protrusion, and a main body forming step of forming the main body by punching the steel sheet in a shape continuous with the outer shape of the protrusion formed in the steel sheet.

### Advantageous Effects of Invention

According to the method of manufacturing a stator core plate according to an embodiment of the present invention, it is possible to prevent plastic deformation of the protrusion without generating a space that causes magnetic flux density to be reduced in the main body.

### Brief Description of Drawings

Fig. 1 is a diagram schematically illustrating a schematic configuration of a motor according to an embodiment, in a cross section including a central axis.
Fig. 2 is a perspective view illustrating a schematic configuration of a stator core.
Fig. 3 is a plan view illustrating a schematic configuration of a stator core plate.
Fig. 4 is a flowchart illustrating a method of manufacturing a stator core.
Fig. 5 is a plan view illustrating an electromagnetic steel sheet on which a protrusion is formed.
Fig. 6(a) is a plan view illustrating a schematic configuration of a mold for molding the protrusion, and Fig. 6(b) is a cross-sectional view taken along arrow B in Fig. 6(a), in a protrusion molding step.
Fig. 7 is an enlarged plan view illustrating a portion A in Fig. 5.
Fig. 8 is a plan view illustrating the electromagnetic steel sheet in which tooth portions are formed.
Fig. 9(a) is a plan view illustrating a schematic configuration of a mold for molding a main body, and Fig. 9(b) is an enlarged plan view illustrating a portion C in Fig. 9(a), in a main body forming step.
Fig. 10 is a side view illustrating a processed surface of the stator core plate after the main body forming step.
Fig. 11(a) schematically illustrates a state in which a first tool is moved with respect to a second tool, and Fig. 11(b) schematically illustrates a state in which the first tool is returned to an original position, in pushback processing.

### Description of Embodiments

Hereinafter, an embodiment of the present invention will be described in detail with reference to the drawings. The same or corresponding parts in the drawings are denoted by the same reference numerals, and the description thereof will not be repeated. Further, the dimensions of constituent members in each drawing do not faithfully represent the actual dimensions of the constituent members, the dimensional ratio of each constituent member, or the like.

Further, in the following description, a direction parallel to the central axis of a rotor is referred to as an "axial direction", a direction orthogonal to the central axis is referred to as a "radial direction", and a direction along an arc with the central axis as the center is referred to as a "circumferential direction". However, there is no intention to limit the direction at the time of use of a motor according to the present invention by the definitions of the directions.

Further, in the following description, the expressions such as "fixed", "connected", "joined" and "attached" (hereinafter referred to as "fixed" or the like) are not limited to the case where the members are directly fixed or the like to each other. It also includes the case where it is fixed or the like via another member. That is, in the following description, the expression such as fixation includes the meaning of direct and indirect fixation or the like between members.

### (Structure of motor)

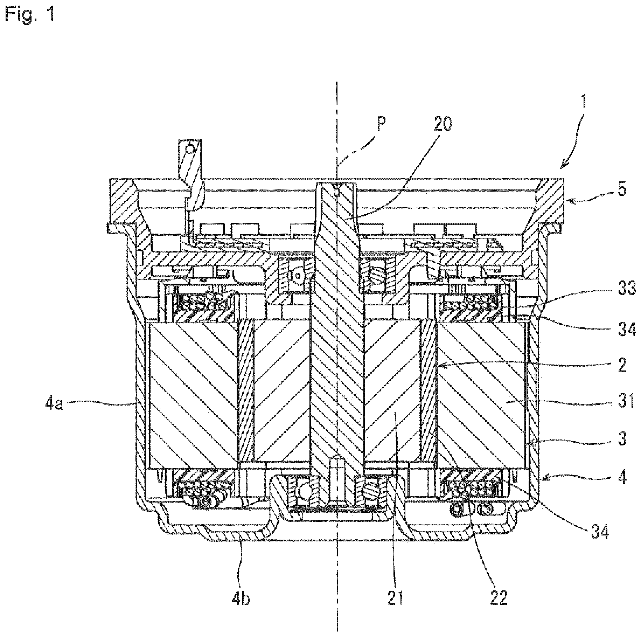

Fig. 1 shows a schematic configuration of a motor 1 according to the embodiment of the present invention. The motor 1 includes a rotor 2, a stator 3, a housing 4, and a lid plate 5. The rotor 2 rotates about a central axis P with respect to the stator 3. In the present embodiment, the motor 1 is a so-called inner rotor type motor in which the rotor 2 is rotatably positioned about the central axis P in the tubular stator 3.

The rotor 2 includes a shaft 20, a rotor core 21, and a magnet 22. The rotor 2 is located radially inside the stator 3 and is rotatable with respect to the stator 3.

In this embodiment, the rotor core 21 has a cylindrical shape extending along the central axis P. The rotor core 21 is formed by laminating a plurality of electromagnetic steel sheets, formed in a predetermined shape, in the thickness direction.

The shaft 20 extending along the central axis P is fixed to the rotor core 21 in a state of penetrating in the axial direction. As a result, the rotor core 21 rotates with the shaft 20. Further, in the present embodiment, a plurality of magnets 22 are located on the outer peripheral surface of the rotor core 21 at predetermined intervals in the circumferential direction. Further, the magnets 22 may be a ring magnet connected in the circumferential direction.

The stator 3 is housed in the housing 4. In the present embodiment, the stator 3 has a tubular shape, and the rotor 2 is disposed radially inside. That is, the stator 3 is positioned so as to face the rotor 2 in the radial direction. The rotor 2 is positioned radially inside the stator 3 so as to be rotatable about the central axis P.

The stator 3 includes a stator core 31, a stator coil 33, and a bracket 34. In the present embodiment, the stator core 31 has a cylindrical shape extending in the axial direction.

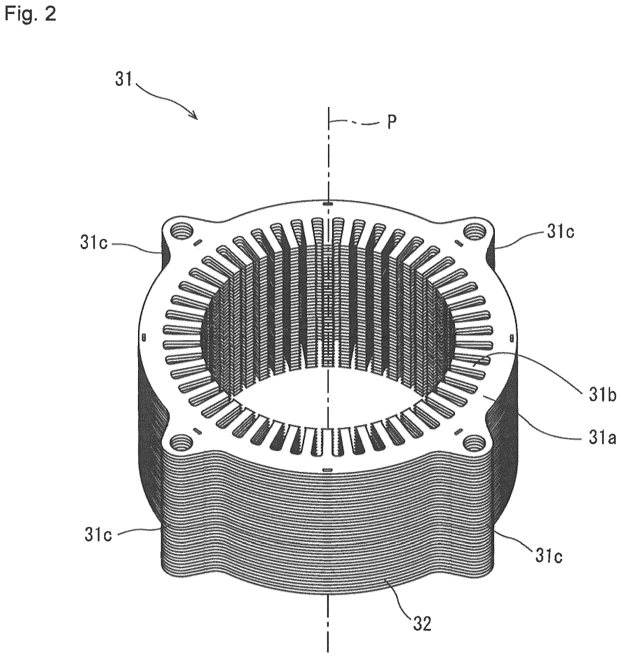

As illustrated in Fig. 2, the stator core 31 has a plurality of teeth 31b extending radially inward from a tubular yoke 31a. The stator coil 33 illustrated in Fig. 1 is wound on the bracket 34 made of an insulating resin material or the like attached to the teeth 31b of the stator core 31. The brackets 34 are disposed on both axial end faces of the stator core 31. The stator core 31 has a plurality of flanges 31c extending radially outward from the tubular yoke 31a. The stator core 31 has a plurality of stator core plates 32 formed in a predetermined shape and laminated in the thickness direction.

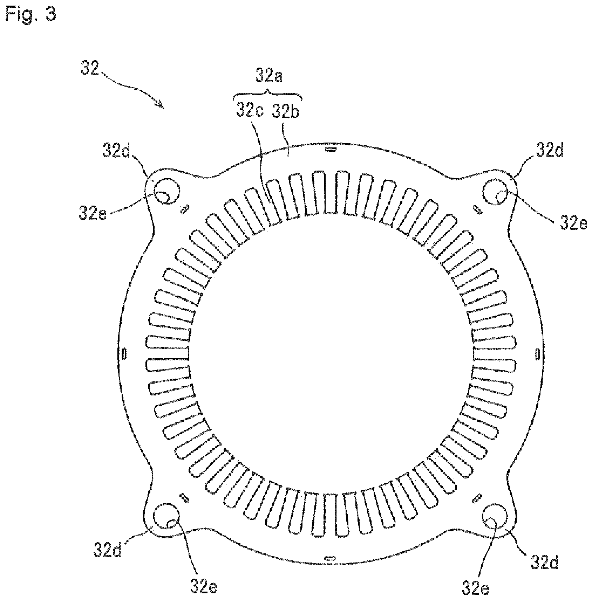

As illustrated in Fig. 3, the stator core plate 32 constituting the stator core 31 includes a disk-shaped main body 32a and a protrusion 32d extending radially outward from the main body 32a. The main body 32a includes a yoke portion 32b constituting the yoke 31a of the stator core 31 and a tooth portion 32c constituting the tooth 31b of the stator core 31. The protrusion 32d constitutes the flange 31c of the stator core 31. The protrusion 32d is connected by a curved line having a smooth protruding shape extending radially outward from the outer periphery of the main body 32a. A through hole 32e is formed in the protrusion 32d.

As shown in Fig. 2, the housing 4 has a tubular shape and extends along the central axis P. In the present embodiment, the housing 4 has a cylindrical shape having an internal space capable of accommodating the rotor 2 and the stator 3 inside. The housing 4 has a cylindrical side wall 4a and a bottom portion 4b covering one axial end of the side wall 4a. An opening on the other side in the axial direction of the housing 4 is covered with the lid plate 5. The housing 4 and the lid plate 5 are made of, for example, a material containing iron. When the opening of the bottomed cylindrical housing 4 is covered with the lid plate 5, an internal space is formed inside the housing 4. Although not particularly illustrated, the lid plate 5 may be fixed to the housing 4 by, for example, a bolt or the like, or may be fixed by a method such as press-fitting or bonding. The housing 4 and the lid plate 5 may be made of another material such as aluminum (including an aluminum alloy), without being limited to a material containing iron.

### (Method of manufacturing stator core 31)

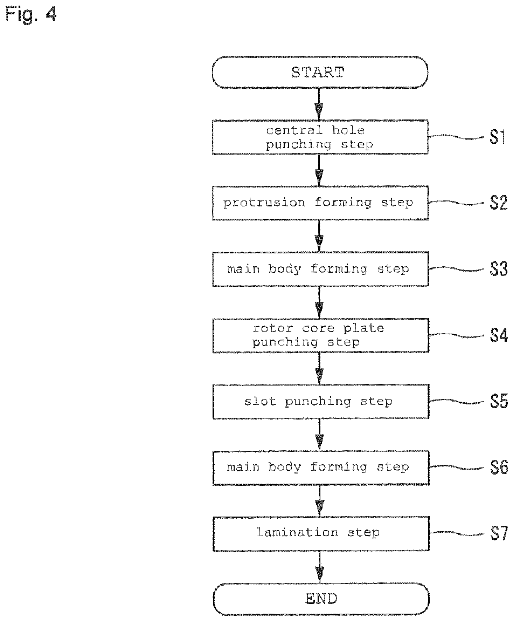

Next, a method of manufacturing the stator core 31 having the above-described configuration will be described with reference to Figs. 4 to 9.

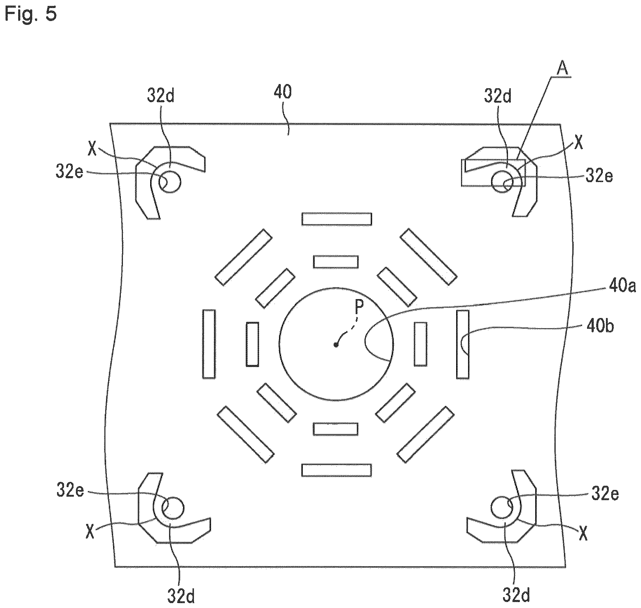

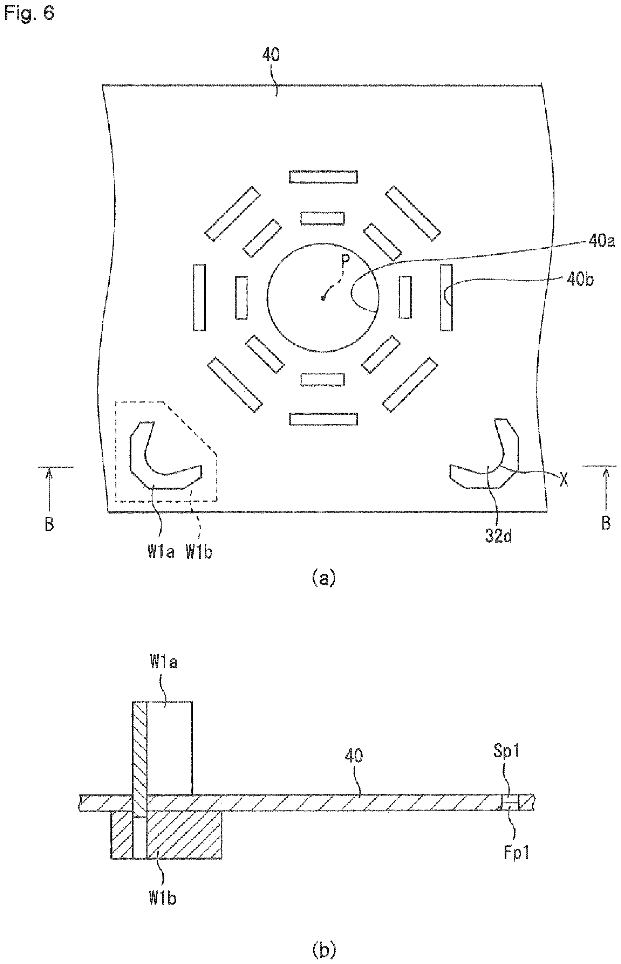

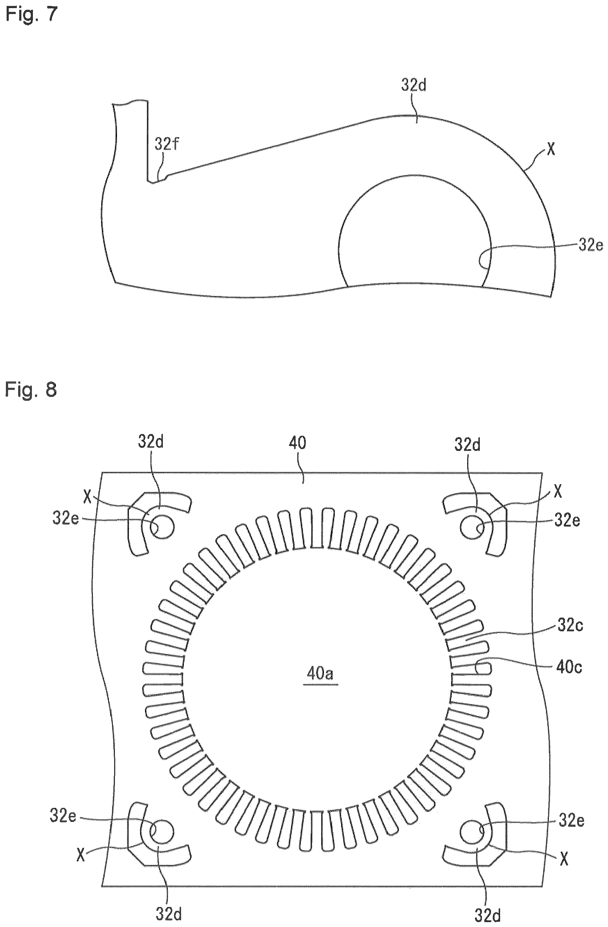

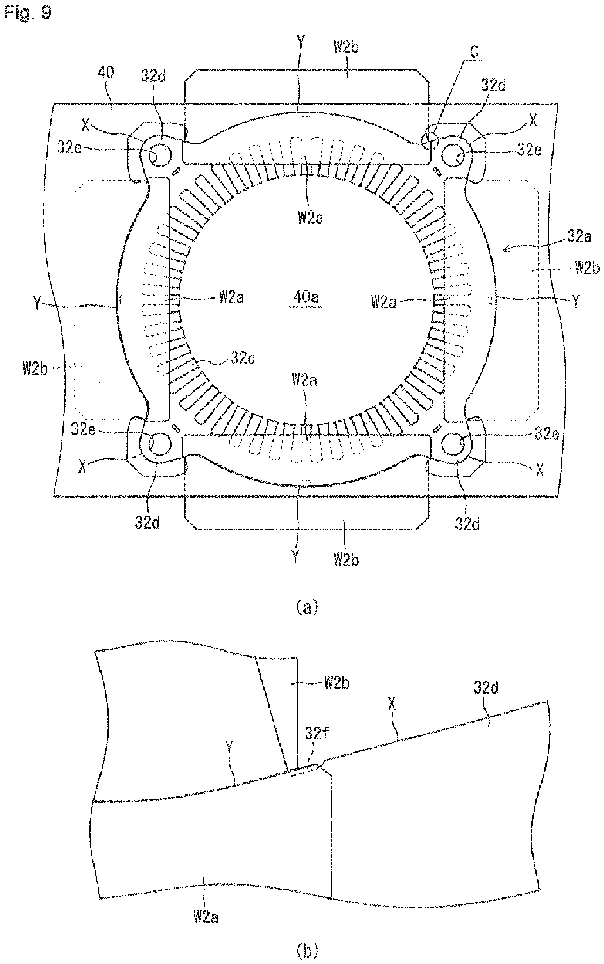

Fig. 4 is a flowchart showing an example of the method of manufacturing the stator core 31. Fig. 5 is a plan view showing a steel sheet 40 in which a part of the protrusion is formed. Fig. 6 illustrates a mold for forming a groove including an outer shape of the protrusion. Fig. 7 is an enlarged plan view showing the protrusion formed on the steel sheet. Fig. 8 is a plan view showing the steel sheet 40 in which tooth portions are formed. Fig. 9 illustrates a mold for forming the main body.

As illustrated in Fig. 5, in the method of manufacturing the stator core 31, first, a circular central hole 40a is punched in the electromagnetic steel sheet 40 forming the stator core plate. Further, a plurality of rectangular holes 40b including a part of the outer shape of the rotor core plate 23 constituting the rotor core 21 surrounding the central hole 40a are punched. This step is a central hole punching step shown in Fig. 4 (step S1). The center of the central hole 40a coincides with the central axis P of the motor 1. Hereinafter, the electromagnetic steel sheet 40 is referred to as the steel sheet 40.

The central hole punching step described above is performed by press working. Since the central hole punching step is similar to a conventional method of manufacturing the stator core 31, the detailed description thereof is omitted.

Hereinafter, a method of manufacturing the stator core plate 32 having the protrusion 32d extending radially outward from the disk-shaped main body 32a in the method of manufacturing the stator core 31, a method of manufacturing the stator core plate, and a mold thereof will be described in detail. The method of manufacturing the stator core plate 32 includes a protrusion forming step (step S2) and a main body forming step (step S3).

In the steel sheet 40 in which the central hole 40a and the rectangular holes 40b are formed as described above, the plurality of protrusions 32d are formed on the outer peripheral side of the central hole 40a. In the step of forming the protrusion 32d, in the steel sheet 40, a predetermined position on the concentric circle of the central hole 40a is punched in a shape including at least a part of an outer shape X of the protrusion 32d. As a result, at least a part of the outer shape X of the protrusion 32d extending radially outward is formed in the steel sheet 40. Further, the through hole 32e for attaching the stator core 31 is punched out on the radially inner side of the formed protrusion 32d. The step of forming at least a part of the outer shape X of the protrusion 32d by punching a part of the steel sheet 40 in a shape including at least a part of the outer shape X of the protrusion 32d is the protrusion forming step shown in Fig. 4 (step S2).

As illustrated in Figs. 6(a) and 6(b), the punching in the protrusion forming step is performed by press working using a protrusion punch W1a and a protrusion die W1b which are molds for forming the stator core plate 32. In the protrusion forming step, a part of the steel sheet 40 placed on the protrusion die W1b in a shape including at least a part of the outer shape X of the protrusion 32d is punched out by the protrusion punch W1a and the protrusion die W1b. The outer shape X of the protrusion 32d follows the outer shape of the protrusion punch W1a when the steel sheet 40 is sheared and fractured by the protrusion punch W1a.

As illustrated in Fig. 6 (b), in the protrusion 32d formed by punching a part of the steel sheet 40 placed on the protrusion die W1b with the protrusion punch W1a, a shear surface Sp1 and a fracture surface Fp1 are formed in order from the protrusion punch W1a side on the punched surface at the outer edge.

As illustrated in Fig. 7, in the protrusion forming step, a recessed portion 32f is formed in the outer shape portion of the protrusion 32d. In the recessed portion 32f, both ends in the circumferential direction of the outer shape portion of the protrusion 32d are recessed radially inward. That is, in the protrusion forming step, the steel sheet 40 is punched in a shape including at least a part of the outer shape portion of the protrusion 32d, in which both ends in the circumferential direction of the outer shape portion of the protrusion 32d are recessed radially inward. The steel sheet 40 is separated from the protrusion punch W1a and the protrusion die W1b after the punching is completed.

Next, as illustrated in Fig. 8, in order to form the rotor core plate 23 constituting the rotor core 21 including the central hole 40a, the rotor core plate 23 is punched with the central axis P of the central hole 40a being the center. This step is a rotor core plate punching step shown in Fig. 4 (step S4).

After the rotor core plate punching step, a plurality of slots 40c are punched around the central hole 40a in order to form a plurality of tooth portions 32c surrounding the central hole 40a in which the rotor core plate 23 has been punched. This step is a slot punching step shown in Fig. 4 (step S5).

The rotor core plate punching step and the slot punching step described above are performed by press working. Since the rotor core plate punching step and the slot punching step are similar to the conventional method of manufacturing the stator core 31, the detailed description thereof is omitted.

Next, as illustrated in Fig. 9(a), in the steel sheet 40 in which the central hole 40a, the plurality of protrusions 32d, and the plurality of tooth portions 32c are formed as described above, the main body 32a including the central hole 40a and the plurality of tooth portions 32c is formed. In the step of forming the main body 32a, the steel sheet 40 is punched into a disk shape in a shape continuous with the outer shape X of the protrusion 32d. As a result, the main body 32a including the central hole 40a and the plurality of tooth portions 32c and the plurality of protrusions 32d are formed of a single member. The step of forming the main body 32a by punching the steel sheet 40 in a shape continuous with the outer shape X of the protrusion 32d formed in the steel sheet 40 is the main body forming step shown in Fig. 4 (step S6).

The punching in the main body forming step is performed by press working using a main body punch W2a and a main body die W2b. In the main body forming step, the steel sheet 40 is punched by the main body punch W2a and the main body die W2b such that an outer shape Y other than the portion punched out by the protrusion die W1b and the protrusion punch W1a in the outer shape of the stator core plate 32 is continuous with the outer shape X of the protrusion 32d formed in the steel sheet 40.

As illustrated in Fig. 9(b), the main body punch W2a punches the steel sheet 40 in a state where the end portion of the main body die W2b faces the recessed portion 32f formed in the outer shape portion of the protrusion 32d. That is, the stator core plate 32 has the recessed portion 32f at a connection portion between the outer shape X of the protrusion 32d formed in the protrusion forming step and the outer shape Y of the main body 32a formed in the main body forming step.

As described above, since the recessed portion 32f is formed in advance at the portion where the outer shape X of the protrusion 32d and the outer shape Y of the main body 32a are connected in the protrusion forming step, a joint between the outer shape X of the protrusion 32d and the outer shape Y of the main body 32a is not formed in the stator core plate 32. Therefore, the stator core plate 32 can be formed in two steps, that is, the protrusion forming step of punching the shape including the outer shape X of the protrusion 32d, and the main body forming step of punching only the outer shape Y of the main body 32a. This makes it possible to prevent plastic deformation of the protrusion 32d in the manufacturing process of the stator core plate 32.

In addition, in the main body forming step, a portion other than the protrusion 32d of the stator core plate 32 punched by the main body punch W2a is pressed down while being in contact with the main body die W2b. That is, the main body die W2b and the main body punch W2a do not contact the protrusion 32d formed in the protrusion forming step in the steel sheet 40.

As described above, in the main body forming step, since the portion other than the protrusion 32d formed by the protrusion punch W1a and the protrusion die W1b is punched by the main body punch W2a and the main body die W2b, a punching stress due to the punching of the main body 32a and an external force due to the contact with the mold for punching the main body 32a are not generated in the protrusion 32d. This makes it possible to prevent plastic deformation of the protrusion 32d in the manufacturing process of the stator core plate 32.

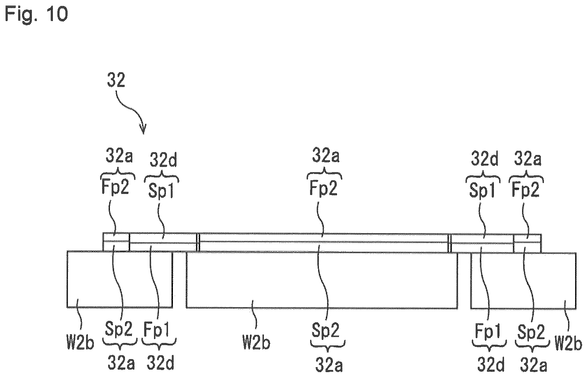

As illustrated in Fig. 10, the main body 32a follows the shape of the main body die W2b as the steel sheet 40 is sheared and fractured by the main body die W2b by the pressing of the main body punch W2a. As a result, in the main body 32a formed by punching a part of the steel sheet 40 placed on the main body die W2b with the main body punch W2a, a shear surface Sp2 and a fracture surface Fp2 are formed in order from the main body die W2b side on the punched surface at the outer edge.

In the stator core plate 32 formed in this manner, the arrangement in the thickness direction of the fracture surface Fp1 and the shear surface Sp1 in at least a part of the outer edge of the protrusion 32d is different from the arrangement in the thickness direction of the fracture surface Fp2 and the shear surface Sp2 in the outer edge of the main body 32a. That is, in the stator core plate 32, since the stator core plate 32 is formed in two steps, that is, the step of punching the shape including the outer shape X of the protrusion 32d and the step of punching the shape of the main body 32a, the punching stress due to the punching of the main body 32a and the external force due to the contact with the main body punch W2a and the main body die W2b for punching the main body 32a are not generated in the protrusion 32d. This makes it possible to prevent plastic deformation of the protrusion 32d of the stator core plate 32.

As described above, the method of manufacturing the stator core plate 32 having the protrusion 32d extending radially outward from the disk-shaped main body 32a includes the protrusion forming step of forming at least a part of the outer shape X of the protrusion 32d by punching a part of the steel sheet 40 in a shape including at least a part of the outer shape X of the protrusion 32d, and the main body forming step of forming the main body 32a by punching the steel sheet 40 in a shape including the outer shape Y continuous with the outer shape X of the protrusion 32d formed on the steel sheet 40.

With such a configuration, since the protrusion 32d is punched in the protrusion forming step which is a pre-step of the main body forming step of forming the main body 32a, the punching stress due to the punching of the main body 32a and the external force due to the contact with the mold for punching the main body 32a are not generated in the protrusion 32d. This makes it possible to prevent plastic deformation of the protrusion 32d without forming a space for reducing magnetic flux density in the main body 32a.

Thereafter, the stator core plate 32 having the plurality of protrusions 32d and the plurality of tooth portions 32c formed by the method of manufacturing the stator core plate 32 is sequentially formed by the punching, and is stacked in the thickness direction. The stacked stator core plates 32 are caulked or welded to obtain the stator core 31 as illustrated in Fig. 2. In the stator core plate 32 formed by the method of manufacturing the stator core plate 32, since the plastic deformation of the protrusion 32d is prevented, the stator core 31 in which the stator core plates 32 are laminated without a gap in the thickness direction is obtained. This step is a lamination step shown in Fig. 4 (step S7).

### (Other embodiments)

Although the embodiment of the present invention has been described above, the above-described embodiment is merely an example for carrying out the present invention. Therefore, the present embodiment is not limited to the above-described embodiment, and the above-described embodiment can be appropriately modified and implemented within a range that does not deviate from the gist thereof.

In the above embodiment, in the main body forming step, the stator core plate 32 formed by the punching is laminated to obtain the stator core 31. However, in addition to the punching, the stator core plate 32 may be formed by so-called pushback processing in which the punched portion is returned to an original position after being punched in the thickness direction in the shape of the stator core plate 32.

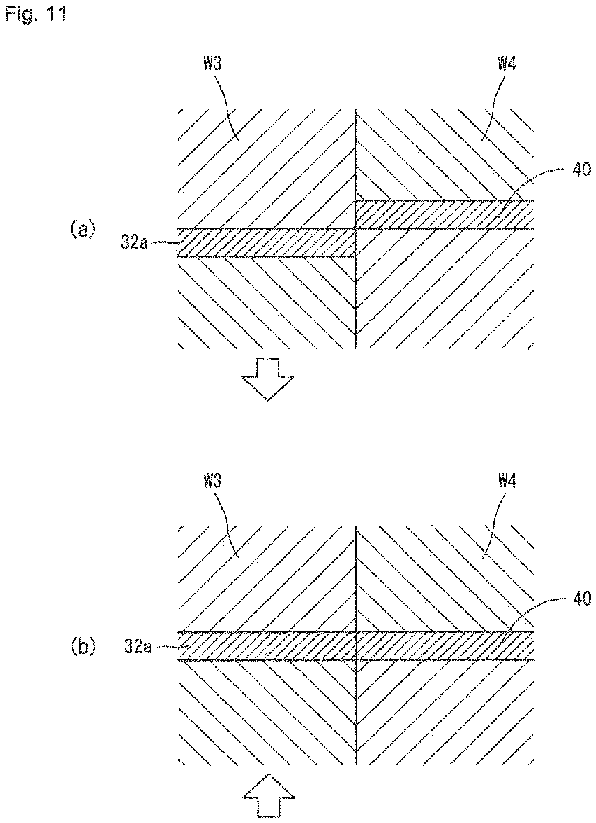

As illustrated in Fig. 11, the pushback processing is performed using a first tool W3 having a pair of upper and lower tools sandwiching the steel sheet 40 in the thickness direction along the outer shape Y of the main body 32a from the inside of the main body 32a and a second tool W4 having a pair of upper and lower tools sandwiching the steel sheet 40 in the thickness direction along the outer shape Y of the main body 32a from the outside of the main body 32a. The first tool W3 is movable in the thickness direction of the steel sheet 40 with respect to the second tool W4. In the present embodiment, the first tool W3 has the same shape as the stator core plate 32. In addition, the second tool W1 has a shape that sandwiches a portion other than the portion punched by the protrusion die W1b and the punch, in the outer shape of the stator core plate 32.

As illustrated in Fig. 11(a), when the first tool W3 moves to one side in the thickness direction of the steel sheet 40 with respect to the second tool W4, shearing is performed at a boundary between the portion sandwiched by the first tool W3 and the portion sandwiched by the second tool W4 in the steel sheet 40. The moving distance of the first tool W3 with respect to the second tool W4 may be a moving distance for separating the steel sheet 40 or a moving distance for not separating the steel sheet 40.

Thereafter, as illustrated in Fig. 11(b), the first tool W3 is moved to the other side in the thickness direction of the steel sheet 40 with respect to the second tool W4 to return the first tool W3 to the original position. As a result, at the boundary, the portion of the steel sheet 40 sandwiched by the first tool W3 is fitted into the portion sandwiched by the second tool W4. The main body 32a is held by friction against the steel sheet 40 around the main body 32a that is not pushed out by the pushback processing.

Here, the step of forming the main body 32a by the pushback processing as described above corresponds to the pushback step.

As described above, in the main body forming step in the method of manufacturing the stator core plate 32, the main body 32a may be formed by the pushback processing in addition to the punching. By molding the stator core plate 32 by the pushback processing, generation of residual stress and residual strain due to processing in the main body 32a is suppressed. As described above, in the method of manufacturing the stator core plate 32, regardless of the method of processing the main body 32a, the punching stress due to the punching of the main body 32a and the external force due to the contact with the mold for punching the main body 32a are not generated in the protrusion 32d. This makes it possible to prevent plastic deformation of the protrusion 32d in the manufacturing process of the stator core plate 32.

In the above embodiment, the motor is a so-called permanent magnet motor. In the permanent magnet motor, the rotor 2 has the magnet 22. However, the motor 1 may be a motor without the magnet 22, such as an induction machine, a reluctance motor, a switched reluctance motor, or a winding field type motor.

In the above embodiment, the method of manufacturing the stator core 31 of the motor 1 has been described, but the present invention is not limited thereto, and the manufacturing method of the above embodiment may be applied when a structure having a laminate of the steel sheets 40 is manufactured.

### Industrial Applicability

The present invention is applicable to a method of manufacturing the stator core plate 32 having the protrusion 32d extending radially outward from the plate disk-shaped main body 32a.

### Reference Signs List

- 1: motor
- 2: rotor
- 3: stator
- 31: stator core
- 32: stator core plate
- 32a: main body
- 32b: yoke portion
- 32c: tooth portion
- 32d: protrusion
- 32e: through-hole
- 32f: recessed portion
- 40: steel sheet

## Claims

1. A method of manufacturing a stator core plate (32) having a protrusion (32d) extending radially outward from a main body (32a) in a disk shape, the method comprising:
a protrusion forming step of forming at least a part of an outer shape (X) of the protrusion (32d) by punching a part of a steel sheet (40) in a shape including at least the part of the outer shape (X) of the protrusion (32d); and
a main body forming step of forming the main body (32a) by punching the steel sheet (40) in a shape continuous with the outer shape (X) of the protrusion (32d) formed in the steel sheet (40).

2. The method of manufacturing the stator core plate (32) according to claim 1, **characterized in that**
the protrusion forming step includes forming a recessed portion (32f) in an outer shape portion of the protrusion (32d).

3. The method of manufacturing the stator core plate (32) according to claim 1 or 2, **characterized in that**
in the main body forming step, the main body (32a) is formed by punching or pushback processing.

4. A stator core plate (32) comprising a protrusion (32d) extending radially outward from a main body (32a) in a disk shape, **characterized in that**
an arrangement of a fracture surface (Fp1) and a shear surface (Sp1) in a thickness direction in at least a part of an outer edge of the protrusion (32d) is different from an arrangement of a fracture surface (Fp2) and a shear surface (Sp2) in a thickness direction in an outer edge of the main body (32a).

5. The stator core plate (32) according to claim 4, further comprising
a recessed portion (32f) at a connection portion between the main body (32a) and the protrusion (32d).

6. A stator core (31) comprising the stator core plate (32) according to claim 4 or 5, the stator core plate (32) being laminated in a thickness direction.

7. A mold for forming a stator core plate (32) having a protrusion (32d) extending radially outward from a main body (32a) in a disk shape, the mold comprising:
a first punching unit (W1a, W1b) configured to punch a part of a steel sheet (40) in a shape including at least a part of an outer shape (X) of the protrusion (32d); and
a main body mold (W2a, W2b) configured to punch the main body (32a), and having a gap between the main body mold (W2a, W2b) and the protrusion (32d).
